# EUROPEAN PATENT APPLICATION

(11) **EP 2 887 568 A1**
(43) Date of publication of application: **24.06.2015**
(21) Application number: 14199604.1
(22) Date of filing: 22.12.2014
(51) Int. Cl.: H04B 15/02

(54) **Method of reducing noise in audio output environment and electronic device supporting the same**

(30) Priority: 20.12.2013 KR 20130160756
(71) Applicant: Samsung Electronics Co., Ltd, Gyeonggi-do 443-742 (KR)
(72) Inventor: Lee, Nam Il, Suwon-si 443-270 Gyeonggi-do (KR); Ko, Han Ho, Yongin-si 446-709 Gyeonggi-do (KR); Park, Je Heon, Suwon-si 443-756 Gyeonggi-do (KR); Hong, Sang Phil, Suwon-si Gyeonggi-do 443-390 (KR)
(74) Representative: Nederlandsch Octrooibureau

(57) **Abstract**

A method of reducing noise is provided. The method includes determining whether an audio output of the audio source has interference based on a sampling frequency and an operating frequency of at least one device element e, and maintaining or changing the operating frequency of the at least one device element depending on whether interference is determined.

## Description

### CROSS-REFERENCE TO RELATED APPLICATION(S)

This application claims priority to Korean patent application No. 10-2013-0160756, filed on December 20, 2013.

### TECHNICAL FIELD

The present disclosure relates to a method of reducing noise in an audio output environment and an electronic device supporting the same.

### BACKGROUND

Portable electronic devices have been distributed widely, such that many people are using the electronic devices. The electronic devices support functions of playing audio source and outputting played audio source.

Typical electronic devices support various functions such as communication, photography and file editing functions, in addition to the function of playing an audio source. The typical electronic devices include a hardware device associated with each function in order to support various functions.

An electronic device including various hardware devices uses a signal within a certain band of frequencies in operation. However, there is a limitation in that a certain frequency applied to the operation of a corresponding device causes interference in an audio output process.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of reducing noise in an audio output environment and an electronic device supporting the same that may adjusting a device operating frequency capable of causing interference in an audio output operation to remove noise resulting from the interference.

In accordance with an aspect of the present disclosure, a method of reducing noise is provided. The method includes determining whether an audio output of the audio source has interference based on a sampling frequency and an operating frequency of at least one device element, and maintaining or changing the operating frequency of the at least one device element depending on whether the interference is determined.

In accordance with another aspect of the present disclosure, an electronic device for supporting an audio output is provided. The electronic device includes a control module configured to change an operating frequency of at least one device element depending on whether there is interference between a sampling frequency of the audio source and an operating frequency of the at least one device element, and an audio processing module configured to play and output the audio source.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 schematically represents elements of an electronic device according to an embodiment of the present disclosure;
FIG. 2 represents devices associated with an audio output among elements of an electronic device according to an embodiment of the present disclosure;
FIG. 3 is a diagram for explaining a method of reducing noise according to an embodiment of the present disclosure; and
FIG. 4 represents an example of a screen interface associated with a noise reduction function according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In describing embodiments of the present disclosure, technical matters well-known in a technical filed to which the present disclosure pertains and having no direct involvement with the present disclosure are not described. Also, elements having substantially the same configurations and functions are not described in detail.

For the same reason, some elements in the accompanying drawings are exaggerated or left out or schematically depicted and the size of each element does not fully reflect an actual size. Thus, the present disclosure is not limited by a relative size or distance depicted on the accompanying drawings.

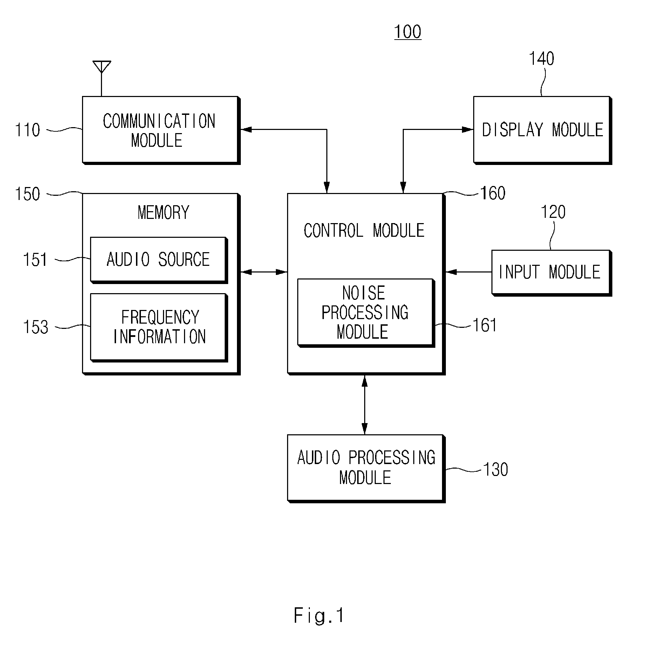

FIG. 1 schematically represents elements (or components) of an electronic device according to an embodiment of the present disclosure.

Referring to FIG. 1, an electronic device 100 according to an embodiment of the present disclosure may include a communication module 110, an input module 120, an audio processing module 130, a display 140, a memory 150, and a control module 160 (or controller, or at least one of a processor).

The electronic device 100 may determine the sampling frequency of audio source (e.g., music source, voice source, specific sound source, and the like) and adjust the operating frequency of an element capable of causing interference with the sampling frequency of corresponding audio source, when there is a request for playing audio source stored in the memory 150 or received by the communication module 110. When the interference is removed by the change of the operating frequency, the electronic device 100 may perform noise-reduced audio source playback.

The communication module 110 may be included when the electronic device 100 supports a communication function. Thus, when the electronic device 100 does not support the communication function, the communication unit 110 may be excluded from the electronic device 100 of the present disclosure. The communication module 110 may form a communication channel with another electronic device or a server device. Alternatively, the communication unit 110 may support a broadcasting reception function. The communication module 110 may receive audio data through the communication channel. The communication module 110 may transmit received audio data to the control module 160. The audio data received by the communication module 110 may be output through the audio processing module 130 according to the control of the control module 160. In this case, the operating frequency of an element of the electronic device 100 (e.g., a specific chipset) may vary to a frequency not causing interference with an audio source sampling frequency depending on the audio source sampling frequency of the received audio data. When receiving specific audio data, the communication module 110 may also receive information on the audio source sampling frequency of corresponding audio data.

The input module 120 may perform an operation associated with the generation of an input signal of the electronic device 100. For example, the input module 120 may include various key buttons, such as at least one of a side key, a home key and a power key, and/or a keypad. Also, the input module 120 may be provided in the form of a touch key. When the display 140 is provided to include a touch screen, the display 140 may operate as the input module 120. The input module 120 may generate an input signal for selecting audio source 151 stored in the memory 150, an input signal for requesting the reception of audio data from an electronic device or an external server device, and an input signal for requesting the end of audio source playback, in response to a user input. Also, the input module 120 may generate an input signal associated with setting a noise reduction function. For example, the input module 120 may generate an input signal for requesting the application of the noise reduction function or an input signal for requesting the cancellation of the noise reduction function being applied, in response to a user input. The noise reduction function of the present disclosure may also be supported by default.

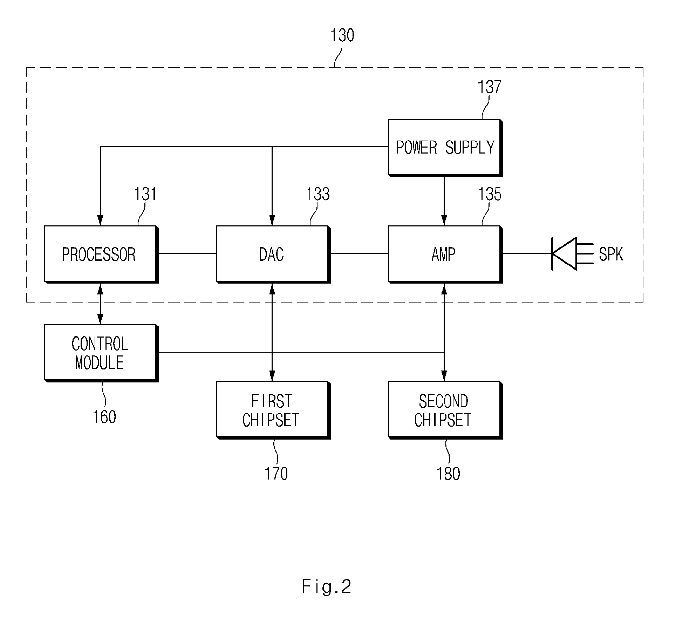

The audio processing module 130 may support an audio output function of the electronic device 100. The audio processing module 130 may include at least one of an audio processer and a speaker. The operating frequencies of at least some of the audio processers in the audio processing module 130 may vary according to the control of the control module 160 in the audio output process. The audio signal processing and operation control of the audio processing module 130 are described in more detail with reference to FIG. 2.

The display 140 may output various screens associated with the operation of the electronic device 100. For example, the display 140 may output a home screen, a standby screen, a menu screen, a screen on which at least one icon is disposed, a locked screen, etc. Also, the display 140 may output a screen associated with an audio source playback request. For example, the display 140 may output a screen including menu items associated with audio source playback, or icons. The display 140 may output a screen showing a list of audio source 151 stored in the memory 150. The display 140 may output a player activation screen that may play the audio source 151 stored in the memory 150. The display 140 may output a screen playing the audio source 151 stored in the memory 150 or a screen playing audio data received by the communication module 110.

The display 140 may output a screen associated with adjusting a noise source frequency. Alternatively, the display 140 may output information associated with adjusting the noise source frequency when displaying an audio source playback screen. When the noise source frequency is recovered (or restore, or back) in response to the end of the audio source playback, the display 140 may output information associated with the recovery of a corresponding frequency. The display 140 may output information or an indicator indicating whether the noise reduction function is applied. A screen interface according to various embodiments of the present disclosure through the display 140 is described with reference to the drawings that are described below.

The memory 150 may store data and programs associated with the operation of the electronic device 100. For example, the memory 150 may store the operating system (OS) of the electronic device 100. The memory 150 may store programs associated with supporting the specific functions of the electronic device 100, such as a web browser program, a broadcast reception function support program, a camera operation program, and a game related program.

The memory 150 according to an embodiment of the present disclosure may store at least one audio source 151 and frequency information 153. The audio source 151 stored in the memory 150 may be received from another electronic device or a web server device through the communication module 110. The audio source 151 may also be produced based on various functions of the electronic device 100. The memory 150 may store a playback related player program. When a specific audio source 151 is selected, a player may be automatically executed or in response to a request to execute the player, the player may be executed. To execute the player, the electronic device 100 may provide icons or menu items through the display 140.

The memory 150 may store the frequency information 153. The frequency information 153 may be information on an operating frequency of a device element of the electronic device 100, e.g., a specific chipset. The frequency information 153 related to each device element may be input during or after the manufacturing of the electronic device 100. Alternatively, the frequency information 153 on the device element may also be received from a server device or another electronic device. Alternatively, the frequency information 153 may also be detected by a frequency detector.

For example, the frequency information 153 may include information on the operation frequency of a charging pump. The charging pump may be a device that forms a negative rail at an output capacitor-less (OCL) amplifier. Also, the frequency information 153 may include information on the operating frequency of the display 140. The frequency information 153 may include information on the operating frequency of a touch screen. The frequency information 153 may include information on a power supply frequency at which power is supplied to a specific chipset of the electronic device 100. The frequency information 153 may include information on the operating frequency of a camera module of the electronic device 100. As described above, the frequency information 153 may include information associated with operating various chipsets in the electronic device 100.

The control module 160 may perform the transmission and processing of data associated with the operation of the electronic device 100 and the transmission and processing of a control signal associated with the operation. The control module 160 according to an embodiment of the present disclosure may control the noise reduction function of inhibiting interference from occurring due to the frequency of a noise source associated with playing audio source. Regarding this matter, the control module 160 may include a noise processing module 161.

When there is a request to play an audio source, the noise processing module 161 may determine a device element that may cause interference in the operation of playing audio source among device elements being operated in the electronic device 100. The noise processing module 161 may previously obtain information on the operating frequencies of device elements of the electronic device 100 to store and manage obtained information in the memory 150. Alternatively, the noise processing module 161 may determine device elements being operated to obtain information on the operating frequencies of corresponding device elements, when there is the request to play the audio source. The frequency information on the device element may be information included in the frequency information 153 stored in the memory 150. The frequency information 153 may be pre-stored as described above or obtained through a frequency detection process. The electronic device 100 may include a frequency detector in order to detect the frequency of a specific device element. The noise processing module 161 may operate a frequency detector to detect frequency information associated with a specific device element when there is the request to play the audio source.

The noise processing module 161 may compare operating frequency information on a device element being operated with the sampling frequency of audio source. The sampling frequency of the audio source may be obtained by examining the header of a data packet for the audio source 151. The noise processing module 161 may determine whether there is interference between the frequency information associated with the device element and the sampling frequency of the audio source. For example, the noise processing module 161 may determine whether a frequency band associated with the device element is within a sampling frequency band of the audio source. The noise processing module 161 may determine that there is interference when the frequency band associated with the device element is within the sampling frequency band of the audio source. The noise processing module 161 may change operating frequency information on the device element. In this process, the noise processing module 161 may determine whether it is possible to change the frequency of the device element, and allow the device to operate at an operation frequency not included in the sampling frequency band of the audio source. A range of frequency changeable may be selected as a band of frequencies that is not included in the sampling frequency band of the audio source and applies a minimum load to a corresponding device element. For example, when the operating frequency of a specific device element is about 50 KHz and the effective frequency of the sampling frequency band of the audio source is about 55 KHz, the noise processing module 161 may determine the operating changeable frequency range of a corresponding device element and adjust the operating frequency from about 50 KHz to about 55 KHz or higher. In this example, when it is possible to change the operating frequency of the device element by about 10 KHz, the noise processing module 161 may change the operating frequency of the device element to about 60 KHz. Alternatively, when it is possible to change the operating frequency of the device element by about 50 KHz, the noise processing module 161 may change the operating frequency of the device element to about 100 KHz.

The noise processing module 161 may recover the original operating frequency of the device element having a changed operating frequency, when the playback of a specific piece of audio source is completed. When there is no change in the operating frequency, the noise processing module 161 may maintain the previous operating frequency of the device element. The noise processing module 161 may determine whether to change the operating frequency of the device element as described above, and maintain or change the operating frequency of the device element according to a determination result, when there is a request to play another piece of audio source after the playback of the specific audio source is completed.

When there is a request for playing a plurality of audio source in a specific order and the playback of audio source is completed, the noise processing module 161 may determine the sampling frequency of the next (or another, or a further) audio source. In this process, the noise processing module 161 may maintain the previous driving frequency of the device element depending on whether there is interference between the sampling frequency of the next audio source to be played and the operating frequency of the device element. For example, when there is no interference between the sampling frequency of the next audio source and the operating frequency band of a device element having no change, the noise processing module 161 may maintain the current operating frequency of the device element. When there is interference between the sampling frequency of the next audio source and the operating frequency band of a device element having no change, the noise processing module 161 may change the current operating frequency of the device element.

When in the operation of playing the previous audio source, the operating frequency of a device element is changed and there is a request for playing the next audio source to be played, the noise processing module 161 may determine whether there is interference between the sampling frequency of the next audio source to be played and the changed operating frequency of a device element. When there is interference between the changed operating frequency of the device element and the sampling frequency of the next audio source to be played, the noise processing module 161 may further change the operating frequency of the device element. When there is no interference between the changed operating frequency of the device element and the sampling frequency of the next audio source to be played, the noise processing module 161 may maintain the changed operating frequency of the device element.

Also, when the operating frequency of the device element is changed and there is a request for playing the next audio source, the noise processing module 161 may determine whether there is interference between the operating frequency of the device element before the change and the sampling frequency of the next audio source to be played. When there is no interference between the operating frequency information on the device element before the change and the sampling frequency of the next audio source to be played, the noise processing module 161 may recover the previous operating frequency of the device element. When there is interference between the operating frequency information on the device element before the change and the sampling frequency of the next audio source to be played, the noise processing module 161 may maintain the operating frequency of the device element.

For example, the sampling frequency of first audio source may be about 52 KHz and its effective frequency is about 26 KHz, and the sampling frequency of second audio source may be about 98 KHz and its effective frequency may be about 49 KHz. The sampling frequency of third audio source may be about 48 KHz and its effective frequency may be about 24 KHz. When the operating frequency of a chipset of the electronic device 100 associated with playing audio source is about 25 KHz, the noise processing module 161 may adjust the operating frequency of the chipset to about 26 KHz when there is a request for playing the first audio source. For example, it is possible to change the operating frequency of the chipset to about 50 KHz.

When the playback of the first audio source is completed and there is a request for the continuous playback of the second audio source, the noise processing module 161 may first recover the operating frequency of the chipset, about 25 KHz and then determine the sampling frequency of the second audio source. Since the sampling frequency of the second audio source is about 49 KHz, the noise processing module 161 may adjust the operating frequency of the chipset to about 50 KHz or higher. For example, the noise processing module 161 may change the operating frequency of the chipset from about 25 KHz to about 50 KHz.

Alternatively, when the playback of the first audio source is completed and there is a request for playing the second audio source as a continuous playback request, the noise processing module 161 may determine the sampling frequency of the second audio source without recovering the previous operating frequency of the chipset when the playback of the first audio source is completed. For example, the noise processing module 161 may temporarily maintain the operating frequency of the chipset changed to about 50 KHz in the operation of playing the first audio source. The noise processing module 161 may confirm through information associated with the audio source 151 stored in the memory 150 or information received externally that the sampling frequency of the second audio source is about 49 KHz. When the noise processing module 161 detects that there is no interference between the sampling frequency of the second audio source and the changed operating frequency of the chipset, the noise processing module 161 may maintain the changed operating frequency without recovering the previous operating frequency of the chipset.

When a request for playing the second audio source is completed and there is a request for playing third audio source as a continuous playback request, the noise processing module 161 may first recover the original operating frequency of the chipset, about 25 KHz. The noise processing module 161 may determine the sampling frequency of the second audio source after recovering the operating frequency. Since the sampling frequency of the third audio source is about 24 KHz, the noise processing module 161 may allow the operating frequency of the chipset to exceed about 24 KHz. For example, the noise processing module 161 may maintain the operating frequency of the chipset at about 25 KHz.

Alternatively, when the playback of the second audio source is completed and there is a request for playing the third audio source as a continuous playback request, the noise processing module 161 may maintain the operating frequency of the chipset applied when the second audio source is played, and determine the sampling frequency of the third audio source. For example, the noise processing module 161 may temporarily maintain the operating frequency of the chipset changed to about 50 KHz in the operation of playing the second audio source. The noise processing module 161 may detect through information associated with the audio source 151 stored in the memory 150 or information received externally that the sampling frequency of the third audio source is about 24 KHz. When the noise processing module 161 detects that there is no interference between the sampling frequency of the third audio source and the changed operating frequency of the chipset, the noise processing module 161 may maintain the current operating frequency of the chipset. Alternatively, the noise processing module 161 may determine whether there is interference between the sampling frequency of the third audio source and the operating frequency of the chipset before a change. The noise processing module 161 may detect that there is no interference between the sampling frequency of the third audio source, about 24 KHz and the operating frequency of the chipset before the change, about 25 KHz. The noise processing module 161 may change the operating frequency of the chipset to the previous operating frequency, about 25 KHz.

According to various embodiments of the present disclosure, when the sampling frequency of the third audio source is about 100 KHz and its effective frequency is about 50 KHz, the noise processing module 161 may allow the changed operating frequency of the chipset to exceed about 50 KHz. For example, the noise processing module 161 may change the changed operating frequency of the chipset to about 75 KHz according to an operating frequency changeable width. When the unit of the frequency changeable width is about 1 KHz, the noise processing module 161 may also change the operating frequency of the chipset to about 51 KHz.

Although various embodiments of the present disclosure describe that the noise processing module 161 determines a device element being currently operated and compares the operating frequency of the device element being operated with the sampling frequency of audio source, the present disclosure is not limited thereto. The noise processing module 161 may select, by default, the operating frequencies of pre-designated specific device elements, e.g., pre-defined device elements determined to be capable of working as noise when audio source is played. In addition, the noise processing module 161 may determine whether there is interference between the operating frequency of the device element selected by default and the sampling frequency of audio source. The device elements pre-determined to work as noise may be experimentally obtained in the processing of manufacturing the electronic device 100. Alternatively, the device element for adjusting the operating frequency may be a device element that is disposed close physically to the audio processing module 130 or has circuit wiring disposed within a certain distance from an audio source playback path. Alternatively, the device element for adjusting the operating frequency may be at least one device element that may work as noise when audio source is played, because a certain level of power is used. Alternatively, the device element for adjusting the operating frequency may be at least one device element that is within a certain distance physically and uses a certain level of power. Since the above situation may be fixed after a corresponding device element is disposed in the electronic device 100, the electronic device 100 of the present disclosure may apply a noise reduction function by default to a specific device element when there is a request for playing audio source.

FIG. 2 represents devices associated with an audio output among elements of an electronic device according to an embodiment of the present disclosure.

Referring to FIG. 2, the audio processing module 130 may include a processor 131, a digital-analog converter (DAC) 133, an amplifier AMP 135, a power supply 137, and a speaker SPK. Also, the audio processing module 130 may further include a microphone (not illustrated) when the electronic device 100 supports a voice signal collection function.

The processor 131 may transmit audio data provided in response to an audio source playback request to the DAC 133. In this case, the processor 131 may provide information associated with audio source requested to be played to the control module 160. For example, the processor 131 may provide sampling frequency information on audio source to the control module 160. Also, when there is a request for continuously playing a plurality of audio source, the processor 131 may transmit information associated with audio source requested to be continuously played to the control module 160 when there is a request for playing each audio source. Alternatively, the processor 131 may also transmit information associated with the plurality of audio source to the control module 160 before the playback of first audio source, when there is the request for continuously playing the plurality of audio source.

The DAC 133 may convert audio data transmitted by the processor 131 into an analog signal. The DAC 133 may transmit the audio source signal converted into the analog signal to the amplifier AMP 135. The DAC 133 may operate by using power supplied by the power supply 137. The DAC 133 may operate at a certain operating frequency. The DAC 133 may operate at the operating frequency changed according to the control of the control module 160.

The amplifier AMP 135 may amplify an analog audio source signal transmitted by the DAC 133 according to a setting. The amplifier AMP 135 may transmit an amplified analog audio source signal to the speaker SPK. The amplifier AMP 135 may operate by using power supplied by the power supply 137.

The power supply unit 137 may supply necessary power to the processor 131, the DAC 133, the amplifier AMP 135, and the speaker SPK. The power supply 137 may operate at a certain operating frequency. The power supply 137 may change the operating frequency according to the control of the control module 160. For example, the power supply 137 may operate at an operating frequency within a band of frequencies that does not interfere with the sampling frequency of audio source.

The speaker SPK may output an amplified analog audio source signal transmitted from the amplifier AMP 135.

Although the audio processing module 130 in the electronic device 100 according to an embodiment of the present disclosure includes the processor 131, the DAC 133, the amplifier AMP 135, the power supply 137 and the speaker SPK, the present disclosure is not limited thereto. That is, the control module 160 of the electronic device may be provided to include the processor 131 and the DAC 133, in which case the audio processing module 130 may also be provided to include the amplifier AMP 135, the power supply 137, and the speaker SPK. Alternatively, the processor 131 and the DAC 133 may also be disposed on a board independently from the control module 160 and the audio processing module 130.

A first chipset 170 may be an example of a device element that is disposed in the electronic device 100 and operates at a certain operating frequency. For example, the first chipset 170 may be at least one of the display 140 or the communication module 110. The display 140 may be any one of various display panels such as a liquid crystal display (LCD) or an organic light-emitting diode (OLED). The display 140 may also include a plurality of panels as needed. The communication module 110 may include at least one of various communication modules, such as a broadcasting reception module, a short-range communication module, and a WiFi communicating module. The display 140 and the communication module 110 may operate at a certain operating frequency. By applying a noise playback function, the operating frequency of the first chipset 170 may be adjusted depending on whether there is interference between the operating frequency and the sampling frequency of audio source.

A second chipset 180 may be an example of another device element that is disposed in the electronic device 100 and operates at a certain operating frequency. For example, the second chipset 180 may be a camera module, an electronic pen operating module, a touch panel, a fingerprint recognition module, or a sensor module. The touch panel may be a panel that supports at least one of various touch schemes, such as a capacitive touch panel or an electromagnetic induction touch panel. The second chipset 180 may also operate by using a certain operating frequency. By applying a noise playback function, the operating frequency of the second chipset 180 may be adjusted depending on whether there is interference between the operating frequency and the sampling frequency of audio source.

The first chipset 170 and the second chipset 180 is provided as examples for explaining that the noise reduction function may also be applied to interference between the operating frequencies of a plurality of device elements. For example, the control module 160 of the electronic device 100 may determine the operating frequencies of a plurality of chipsets being currently operated, when there is a request for playing specific audio source. The control module 160 may adjust the operating frequencies of the plurality of chipsets independently so that there is no interference between the operating frequency and the sampling frequency of specific audio source. Also, the control module 160 may re-adjust or maintain the operating frequencies of chipsets operating at different operating frequencies, depending on whether there is interference between the operating frequency and the sampling frequency of audio source.

According to various embodiments of the present disclosure as described above, the electronic device 100 may include the control module 160 that obtains the sampling frequency of audio source requested to be played, determined interference between the obtained sampling frequency of the audio source and the operating frequency of at least one of device elements being currently operated, and changes or maintains the operating frequency of the device element depending on the interference, and the audio processing module 130 that outputs played audio source.

According to various embodiments of the present disclosure, the device element may include at least one of a charging pump connected to the amplifier of the audio processing module 130, a display operating at a certain operating frequency, a touch panel, a broadcasting reception module, a short-range communication module, a WiFi communication module, a camera module, an electronic pen operating module, a fingerprint recognition module, and a sensor module.

Also, according to various embodiments of the present disclosure, the electronic device 100 may include at least one of a memory storing the audio source and a communication module receiving the audio source from an external electronic device.

According to various embodiments of the present disclosure, the control module 160 may determine at least one device element being currently operated, determine the operating frequency of the device element from pre-stored frequency information or obtain operating frequency information on a pre-defined device element from frequency information stored in the memory.

According to various embodiments of the present disclosure, the control module 160 may change the operating frequency of the device element to be outside an audio source sampling frequency band, when the operating frequency of the device element is within the audio source sampling frequency band.

According to various embodiments of the present disclosure, the control module 160 may change the operating frequency of the device element by a pre-defined certain unit, e.g., about 100 Hz, about 1 KHz, about 50 KHz or about 100 KHz.

According to various embodiments of the present disclosure, the control module 160 may change the changed operating frequency of the device element to the previous operating frequency when the playback of audio source ends.

According to various embodiments of the present disclosure, the control module 160 may determine the sampling frequency of the next audio source when the playback of the next audio source is continuously requested after the playback of the audio source ends, and adjust the operating frequency of the device element or maintain the previous operating frequency depending on whether there may be interference between the sampling frequency of the next audio source and the operating frequency of the device element.

According to various embodiments of the present disclosure, the control module 160 may further change the changed operating frequency of the device element when there may be interference between the sampling frequency of the next audio source and the changed operating frequency of the device element.

According to various embodiments of the present disclosure, the control module 160 may maintain the changed operating frequency of the device element when there may be no interference between the sampling frequency of the next audio source and the changed operating frequency of the device element.

According to various embodiments of the present disclosure, the control module 160 may recover the operating frequency of the device element before a change when there may be interference between the sampling frequency of the next audio source and the operating frequency of the device element before the change.

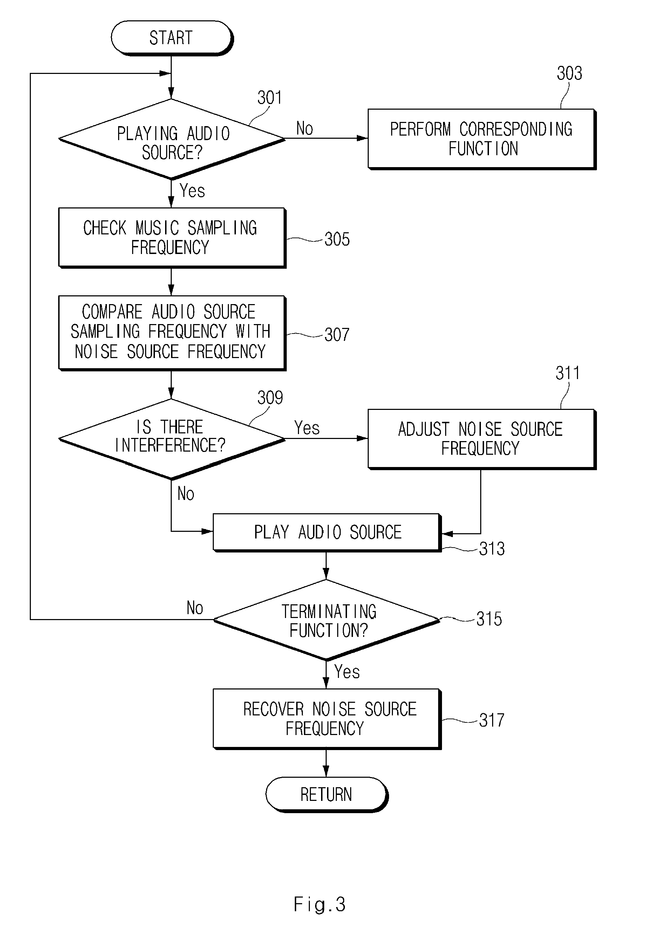

FIG. 3 is a diagram for explaining a method of reducing noise according to an embodiment of the present disclosure.

Referring to FIG. 3, the control module 160 of the electronic device 100 may determine whether there is an event associated with playing audio source playback in operation 301. The event for requesting the audio source playback may include at least one of an event for requesting to play the audio source 151 stored in the memory 150, and an event for requesting to play an audio source provided by an external electronic device or server device that provides specific audio source. For example, the control module 160 may output at least one of an icon, menu item or list associated with playing the audio source 151 stored in the memory 150. In addition, the control module 160 may identify an event selecting a specific item of a corresponding icon, menu item or list, as the event for requesting to play the audio source. Also, the electronic device 100 may form a communication channel with a specific server device or external electronic device providing audio source through the communication module 110. In addition, the electronic device 100 may receive and display audio data stored in the server device or external electronic device in response to a user input. In this case, the control module 160 may identify an event for requesting to receive audio data from the server device or external electronic device and to output on the display 140 as the event for requesting to play the audio source.

In operation 301, when the event is irrelevant to the playback of the audio source, the control module 160 may proceed to operation 303 to perform a function corresponding to a corresponding event. For example, the electronic device 100 may provide the noise reduction function of the present disclosure by default in an audio output process.

Also, the noise reduction function of the present disclosure may be provided in a specific mode. When being provided in the specific mode, the control module 160 may determine whether a noise reduction mode is in an activated state when there is a request for playing audio source in operation 301. When the noise reduction mode is in an inactivated state, the control module 160 may control the playback of the audio source requested to be played, without performing the noise reduction function in operation 303.

When there is an event associated with playing the audio source in operation 301, the control module 160 may proceed to operation 305 to determine the sampling frequency of the audio source. For example, the control module 160 may examine the header of a data packet for audio source 151 file stored in the memory 150 to determine the sampling frequency of the audio source. Alternatively, the control module 160 may determine the sampling frequency value of the audio source through a server device (not shown) or an external electronic device (not shown).

When the sampling frequency value of the audio source is confirmed, the control module 160 may compare the frequency of a noise source with the sampling frequency value of the audio source in operation 307. The control module 160 may obtain the frequency value of the noise source from the frequency information 153 pre-stored in the memory 150. For example, the control module 160 may obtain operating frequency information on a specific device element from the frequency information 153 when there is a request for playing audio source. In this case, the specific device element included in the frequency information 153 may be a device element that is selected in order to apply whether to adjust a frequency by default when there is a request for playing audio source. Alternatively, the control module 160 may determine the chipsets of the electronic device 100 being currently operated and collect frequency information on the chipsets. The frequency information on the chipsets may be obtained in the process of manufacturing a chipset. Alternatively, the control module 160 may include a frequency detector and also detect a frequency generated from chipsets being operated.

In operation 309, the control module 160 may determine whether there may be interference between the sampling frequency of audio source and the frequency of a noise source. For example, the control module 160 may determine whether the frequency band of the noise source is within the audio source sampling frequency band. When it is determined in operation 309 that the noise source causes interference, the control module 160 may adjust the frequency of the noise source in operation 311. When it is determined in operation 309 that there is no interference, the control module 160 may play audio source requested to be played in operation 313.

Next, the control module 160 may determine whether there is a function end related event in operation 315. When there is no function end related event, the control module 160 may proceed to operation 313 to support an audio source playback function. According to embodiments of the present disclosure, the control module 160 may monitor whether there is a change in the sampling frequency of audio source. In addition, when there is the change in the sampling frequency of the audio source and thus it is determined that there is no interference between the frequency of the noise source and the sampling frequency of the audio source, the control module 160 may control to play audio source without a change in the frequency of the noise source. When audio source changes as the sampling frequency of the audio source changes while the frequency of the noise source has changed, the control module 160 may determine whether there is interference between changed sampling frequency of the audio source and the original or previous frequency of the noise source. When there is no interference between changed the sampling frequency of the audio source and the original frequency of the noise source, the control module 160 may allow the noise source to operate at an original frequency.

When there is a function end related event in operation 315, the control module 160 may proceed to operation 317 to recover the frequency of the noise source. For example, when the frequency of the noise source is 50 KHz and then changes to 100 KHz to perform audio source playback, the control module 160 may allow the frequency to be 50 KHz when a function ends. After recovering the frequency of the noise source, the control module 160 may return to a state before the audio source playback.

As described above, various embodiments of the present disclosure may disclose a method of reducing noise in an audio output environment. The method includes the processes of determine the sampling frequency of audio source requested to be played, determining whether there is interference between the sampling frequency of the audio source and the operating frequency of at least one device element being currently operated, and changing the operating frequency of the device element depending on the interference.

According to various embodiments of the present disclosure, the process of determining the frequency may include the processes of selecting at least one piece of audio source stored in the memory 150, and determining sampling frequency information on selected audio source.

According to various embodiments of the present disclosure, the process of determining the frequency may include the process of receiving sampling frequency information on audio source associated with audio source audio data while receiving the audio source from an external electronic device.

According to various embodiments of the present disclosure, the process of determining the interference may include the processes of determining at least one device element being currently operated, determining the operating frequency of the device element from pre-stored frequency information, and determining whether the operating frequency of the device element being currently operated is within the audio source sampling frequency band.

According to various embodiments of the present disclosure, the process of determining the interference may include the processes of obtaining operating frequency information on a pre-defined device element from frequency information stored in a memory, and determining whether the operating frequency of a device element obtained from the memory 150 is within the audio source sampling frequency band.

According to various embodiments of the present disclosure, the process of changing may include the process of changing the operating frequency of the device element to be outside an audio source sampling frequency band, when the operating frequency of the device element is within the audio source sampling frequency band.

According to various embodiments of the present disclosure, the method may further include the process of changing the operating frequency of the device element to a specified size.

According to various embodiments of the present disclosure, the method may further include the processes of ending the playback of audio source being played, and changing the changed operating frequency of the device element to the previous operating frequency.

According to various embodiments of the present disclosure, the method may further include the processes of requesting the continuous playback of the next audio source when the playback of the audio source being played ends, determining the sampling frequency of the next audio source, and adjusting the operating frequency of the device element or maintain the previous operating frequency depending on whether there may be interference between the sampling frequency of the next audio source and the operating frequency of the device element.

According to various embodiments of the present disclosure, the method may further include the process of further changing the changed operating frequency of the device element when there may be interference between the sampling frequency of the next audio source and the changed operating frequency of the device element.

According to various embodiments of the present disclosure, the method may further include the process of maintaining the changed operating frequency of the device element when there may be no interference between the sampling frequency of the next audio source and the changed operating frequency of the device element.

According to various embodiments of the present disclosure, the method may further include the process of recovering the operating frequency of the device element before a change when there may be interference between the sampling frequency of the next audio source and the operating frequency of the device element before the change.

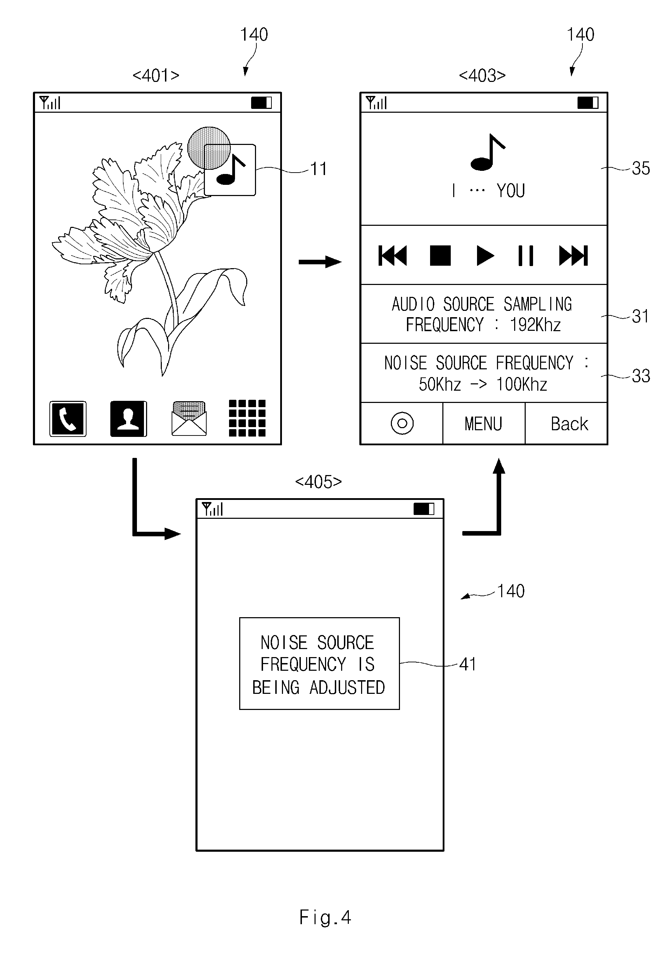

FIG. 4 represents an example of a screen interface associated with a noise reduction function according to an embodiment of the present disclosure.

Referring to FIG. 4, the display 140 may output a standby screen associated with creating an audio source playback request event as shown in screen 401. In this example, screen 401 may be a screen on which an icon 11 associated with an audio source playback request is disposed. The screen on which the icon 11 associated with the audio source playback request is disposed may also be replaced with a menu screen. When the audio source playback request event is assigned to a specific key button, the electronic device 100 may output a screen associated with audio source playback when a corresponding key button is selected.

When the icon 11 associated with the audio source playback is selected, the display 140 may output an audio source playback related screen. For example, the display 140 may output a list of audio sources 151 stored in the memory 150. Alternatively, the display 140 may output a player execution screen associated with audio source playback as shown in screen 403. The player execution screen may include an audio source information region 35, an audio source sampling frequency information region 31, and a noise source frequency information region 33. The audio source information region 35 may include a list of audio source associated with audio source selection or information associated with a previous audio source playback history. Also, the audio source information region 35 may display information associated with selected audio source, e.g., a song title.

The audio source sampling frequency information region 31 may include sampling frequency information on audio source being currently played or to be played. The audio source sampling frequency information region 31 in screen 403 may represent that audio source having a sampling frequency of 192 KHz will be played or is being played.

The noise source frequency information region 33 may include the information change of another device element adjusted by the audio source sampling frequency. For example, the noise source frequency information region 33 in screen 403 may include that the operating frequency of a noise source is changed from 50 KHz to 100 KHz in order to inhibit interference between the operating frequency and the audio source sampling frequency, 192 KHz. Although screen 403 shows a noise source frequency, the present disclosure is not limited thereto. The "noise source frequency" may be modified to the name of a corresponding device element. For example, the "noise source frequency" may be modified to a "display operating frequency", "touch panel operating frequency" or "charging pump operating frequency". Also, when operating frequencies of a plurality of device elements are changed by applying a noise reduction function, the noise source frequency information region 33 may include information on the plurality of device elements. For example, the noise source frequency information region 33 may include the plurality of device elements in a list. The noise source frequency information region 33 may be included while the noise reduction function is applied. When the noise reduction function is in an inactivated state, the noise source frequency information region 33 may be excluded from the player execution screen.

When audio source playback is requested while screen 401 is displayed, the control module 160 may determine whether the noise reduction function is applied. When the noise reduction function is applied by default according to a setting, the control module 160 may control to display the player execution screen according to the noise reduction function in screen 403 as described above. Alternatively, a pop-up window 41 associated with the noise reduction function may be displayed as shown in screen 405. The pop-up window 41 may include information associated with the noise reduction function. For example, the pop-up window 41 may include information providing a notification that "a noise source frequency is being adjusted". Alternatively, the pop-up window 41 may include information associated with a corresponding device element, e.g., a message "a display operating frequency is being adjusted".

According to the method of supporting the noise reduction function and the electronic device according to embodiments of the present disclosure as described above, the present disclosure may change the operating frequency of a device element capable of working as noise in the process of playing audio source to support better audio source playback.

According to the method of reducing noise in an audio output environment and the electronic device supporting the same as discussed above, the present disclosure may adjust the operating frequency of a device capable of causing interference in the audio output environment to remove noise from an audio output.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method of reducing noise, the method comprising:
identifying an audio output of an audio source has interference based on a sampling frequency of the audio source and an operating frequency of at least one device element; and
changing the operating frequency of the at least one device element when the interference is identified.

2. The method of claim 1, further comprises:
selecting at least one audio source stored in a memory; and
determining the sampling frequency information on the selected at least one audio source.

3. The method of claim 1, wherein further comprises receiving sampling frequency information on the audio source associated with audio data while receiving the audio data from an external electronic device

4. The method of claim 1, wherein the identifying the audio output of the audio source has interference comprises:
determining at least one device element being currently operated among device elements;
determining the operating frequency of the at least one device element being currently operated; and
determining whether the operating frequency is within a sampling frequency band of the audio source.

5. The method of claim 1, wherein the identifying the audio output of the audio source has interference comprises:
obtaining operating frequency information on a designated device element from frequency information stored in a memory; and
determining whether the operating frequency obtained from the operating frequency information is within a sampling frequency band of the audio source.

6. The method of claim 1, wherein the changing of the operating frequency of the at least one device element comprises changing the operating frequency of the at least one device element to be outside an audio source sampling frequency band, when the operating frequency of the at least one device element is within the audio source sampling frequency band.

7. The method of claim 6, further comprising changing the operating frequency of the at least one device element to a specified size.

8. The method of claim 6, further comprising:
terminating the playback of the audio source;
restoring the changed operating frequency of the at least one device element to the operating frequency.

9. The method of claim 6, further comprising:
requesting a playback of another audio source;
determining a sampling frequency of the other audio source;
determining whether interference is generated between the sampling frequency of the other audio source and the operating frequency of the at least one device element; and
adjusting the operating frequency of the at least one device element or maintaining a previous operating frequency, depending on whether the interference is determined.

10. The method of claim 9, further comprising further changing a changed operating frequency of the at least one device element when interference is generated between the sampling frequency of the other audio source and the changed operating frequency of the at least one device element.

11. The method of claim 9, further comprising maintaining a changed operating frequency of the device element when interference is not generated between the sampling frequency of the other audio source and the changed operating frequency of the device element.

12. The method of claim 9, further comprising recovering a previous operating frequency of the device element before a change when interference is generated between the sampling frequency of the other audio source and the operating frequency of the device element before the change.

13. An electronic device for supporting an audio output, the electronic device comprising:
a control module configured to change an operating frequency of at least one device element when interference is generated between a sampling frequency of the audio source and an operating frequency of the at least one device element; and
an audio processing module configured to play and output the audio source.

14. The electronic device of claim 13, wherein the at least one device element comprises at least one selected from a group consisting of a charging pump connected to an amplifier of the audio processing module, a display operating at a certain operating frequency, a touch panel, a broadcasting reception module, a short-range communication module, a WiFi communication module, a camera module, an electronic pen operating module, a fingerprint recognition module, and a sensor module.

15. The electronic device of claim 13, further comprising at least one selected from a group consisting of:
a memory configured to store at least one selected from a group consisting of the audio source and operating frequency information on the at least one device element;
a communication module configured to receive the audio source from an external electronic device; and
a display configured to display information or an indicator indicating whether a noise reduction function is applied.

16. The electronic device of claim 13, wherein the control module is configured to one of:
determine at least one device element being currently operated and determine the operating frequency of the at least one device element from pre-stored frequency information; and
obtain the operating frequency information on a designated device element from frequency information stored in a memory.

17. The electronic device of claim 13, wherein the control module is further configured to change the operating frequency of the at least one device element to be outside an audio source sampling frequency band when the operating frequency value of the at least one device element is within the audio source sampling frequency band.

18. The electronic device of claim 17, wherein the control module is further configured to change the operating frequency of the at least one device element to a specified size.

19. The electronic device of claim 17, wherein the control module is configured to change a changed operating frequency of the at least one device element to a previous operating frequency when the audio source being played ends.

20. The electronic device of claim 17, wherein the control module is configured to one of:
further change a changed operating frequency of the at least one device element when a request for continuous playback of another audio source is occurred, and interference is generated between a sampling frequency of the other audio source and the changed operating frequency of the at least one device element,
maintain the changed operating frequency of the at least one device element when interference is not generated between the sampling frequency of the other audio source and the changed operating frequency of the at least one device element, and
restore the operating frequency of the at least one device element before a change when interference is generated between the sampling frequency of the other audio source and the operating frequency of the at least one device element before the change.
